# EUROPEAN PATENT SPECIFICATION

(11) **EP 2 676 190 B1**
(45) Date of publication and mention of the grant of the patent: **31.10.2018**
(21) Application number: 11858978.7
(22) Date of filing: 28.12.2011
(51) Int. Cl.: G06F 3/16, G06F 21/84

(54) **SYSTEM, METHOD AND COMPUTER PROGRAM PRODUCT FOR APPLICATION-AGNOSTIC AUDIO ACCELERATION**
SYSTEM, VERFAHREN UND COMPUTERPROGRAMMPRODUKT FÜR ANWENDUNGSAGNOSTISCHE AUDIOBESCHLEUNIGUNG
SYSTÈME, PROCÉDÉ ET PRODUIT PROGRAMME D'ORDINATEUR POUR ACCÉLÉRATION AUDIO SANS CONNAISSANCE DE L'APPLICATION

(30) Priority: 17.02.2011 US 201113029661
(43) Date of publication of application: 25.12.2013
(73) Proprietor: Intel Corporation, Santa Clara, CA 95054 (US)
(72) Inventor: KABURLASOS, Nikos, Lincoln California 95648 (US); WORRELL, Devon, Folsom California 95630 (US)
(74) Representative: Goddar, Heinz J.
(86) International application number: PCT/US2011/067580
(87) International publication number: WO 2012/112219

(56) References cited:
- US-A1- 2008 082 319
- US-A1- 2009 060 032
- US-A1- 2009 069 910
- US-A1- 2010 103 195
- US-B1- 7 782 328

## Description

### BACKGROUND

Media applications today typically perform audio decode on a host processor, which may require significant central processing unit (CPU) cycles, especially in the case of premium audio. This necessarily increases power consumption by the host processor. Measurements have shown that decoding DTS HD Master audio, for example, may add ∼0.5W to CPU power requirements during Blu-ray playback.

A separate graphics engine, however, may have the required signal processing logic (e.g., multiply-accumulate) that could be used to decode an audio stream in addition to decoding the video stream. A graphics engine core may process media workloads more efficiently (with respect to power consumption) than general-purpose CPU cores. Processing video frames on a graphics engine can save multiple watts of CPU power compared to processing the same frames on the host. A graphics engine may be capable of executing tens or hundreds of parallel threads, which would allow the completion of parallelizable workloads in a much shorter period of time (compared to executing the same workloads on the host), allowing the overall CPU package to enter sleep states more frequently, therefore saving CPU power. A high degree of parallelism may be possible when processing premium audio.

One scheme that could take advantage of a graphics engine for audio processing would entail approximately duplicating, for the audio path, the software architecture that may already be in place for video. But this would create the burden of having to modify media applications so that they can perform audio decoding on the graphics engine, along with video decoding. US 2009/069910 A1 discloses an audio controller coupled to an audio codec. Tunneling logic receives audio data from the audio controller, encapsulates an audio data in a message suitable for an interconnect, and sends the message to a graphics card. The message also includes encryption information. The graphics card includes audio/visual processing logic and an audio translator. The tunneling logic provides a diversion of audio data from a traditional separate audio codec to a graphics engine able to process audio data, including encryption aspects.

The present invention provides a method according to claim 1, a computer program product according to claim 6 and a system according to claim 10.

The dependent claims relate to special embodiments thereof.

### BRIEF DESCRIPTION OF THE DRAWINGS/FIGURES

FIG. 1 is a block diagram illustrating a media processing architecture in which an embodiment may operate.
FIG. 2 is a block diagram illustrating the components and data flow of an embodiment.
FIG. 3 is a block diagram illustrating the computing context of an embodiment.
FIG. 4 is a flow chart illustrating the processing of an embodiment.
FIG. 5 is a flow chart illustrating the transfer of audio data to a graphics engine, according to an embodiment.
FIG. 6 is a flow chart illustrating the receipt, by a down codec function driver, of decrypted and decoded audio data from the graphics engine, according to an embodiment.

In the drawings, the leftmost digit(s) of a reference number identifies the drawing in which the reference number first appears.

### DETAILED DESCRIPTION

An embodiment is now described with reference to the figures, where like reference numbers indicate identical or functionally similar elements.

Disclosed herein are methods, systems and computer program products with which audio decryption and decoding may be performed on a graphics engine instead of on a host processor. This may be accomplished as described below, without having to modify the media application program(s).

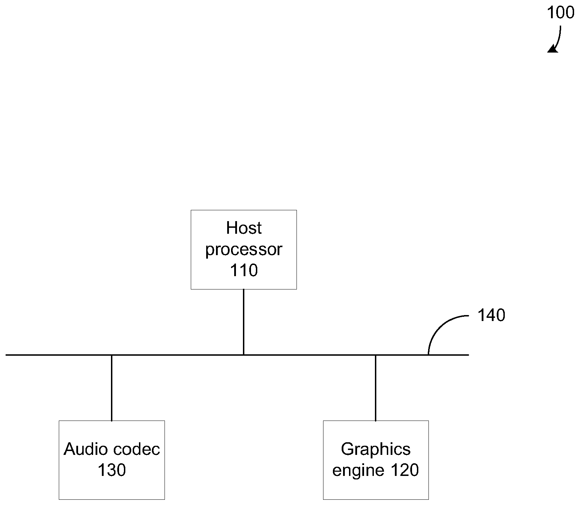

An embodiment of the system described herein may operate in the context of an architecture illustrated in FIG. 1. Such an architecture 100 may include a host processor 110. The processor 110 may be in communication with a graphics engine 120. The graphics engine 120 may typically be used to perform graphics processing. As will be described in greater detail below, graphics engine 120 may be used to perform audio processing as well, according to an embodiment. The illustrated architecture may also include a down codec 130. In an embodiment, the down codec 130 may be a component that receives decoded audio samples and renders the audio, thereby driving one or more output devices, such as speakers or headphones. The host processor 110, the graphics engine 120, and the down codec 130 may communicate via a communications infrastructure 140. In an embodiment, communications infrastructure 140 may take the form of a bus, for example.

In embodiments, the invention may be incorporated into a media system. For example, embodiments may be incorporated into a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, or other stationary or portable information appliance.

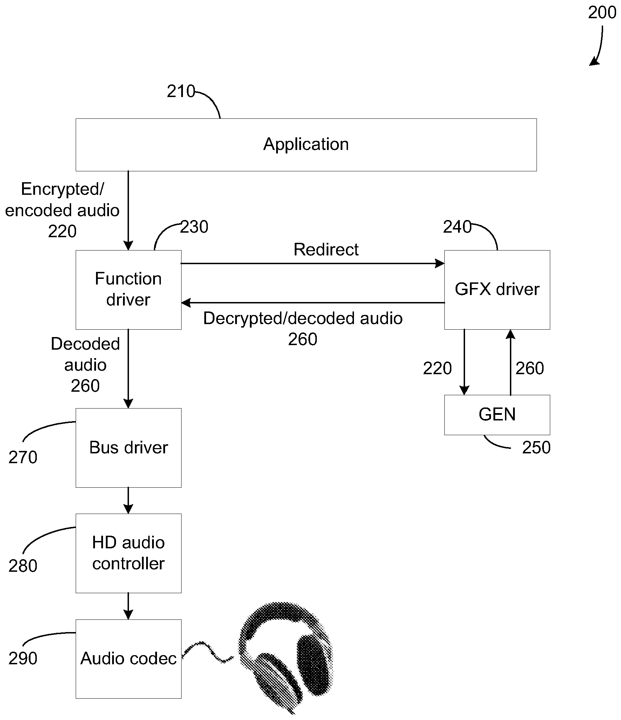

FIG. 2 is a block diagram illustrating the system 200 described herein, according to an embodiment. A down codec function driver 230 may first expose a down codec 290 to a media application 210. The media application 210 may then send encrypted and encoded audio data 220 to the down codec function driver 230. The down codec function driver 230 may then redirect the audio data 220 to a graphics (GFX) driver 240. The graphics driver 240 may then pass the audio data 220 to a graphics engine 250. In the illustrated embodiment, the graphics engine 250 may be an Intel Graphics Engine GEN (available from Intel Corp., Santa Clara, California), for example and without limitation. In alternative embodiments, alternative graphics engines may be used.

The graphics engine 250 may then decrypt and decode the audio data. The decrypted and decoded audio data 260 may then be returned to the graphics driver 240, which may then send the decrypted and decoded audio data 260 to the down codec function driver 230. The down codec function driver 230 may then pass the decrypted and decoded audio data 260 to the down codec 290 for rendering. In the illustrated embodiment, the decrypted and decoded audio data 260 may be sent to the down codec 290 via a bus driver 270 and an audio controller 280.

One or more features disclosed herein may be implemented in hardware, software, firmware, or combinations thereof, including discrete and integrated circuit logic, application specific integrated circuit (ASIC) logic, programmable gate arrays, and/or microcontrollers, or may be implemented as part of a domain-specific integrated circuit package, or a combination of integrated circuit packages. The term software, as used herein, refers to a computer program product including a non-transitory computer readable medium having computer program logic stored therein to cause a computer system to perform one or more features and/or combinations of features disclosed herein.

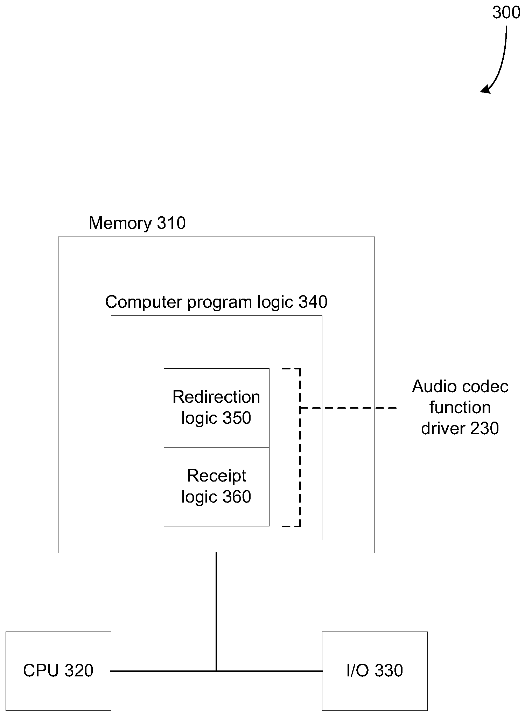

In an embodiment, the down codec function driver 230 may be implemented as software or firmware. Such a software or firmware embodiment is illustrated in the context of a computing system 300 in FIG. 3. System 300 may include a central processing unit (CPU) 320 and a body of memory 310 that may include one or more non-transitory computer readable media that may store computer program logic 340. Memory 310 may be implemented as a read-only memory (ROM) or random access memory (RAM) device, for example. CPU 320 and memory 310 may be in communication using any of several technologies known to one of ordinary skill in the art, such as a bus. Computer program logic 340 contained in memory 310 may be read and executed by CPU 320. One or more I/O ports and/or I/O devices, shown collectively as I/O 330, may also be connected to CPU 320 and memory 310. In the embodiment of FIG. 3, the down codec function driver 230 is shown as part of a larger body of computer program logic 340.

The down codec function driver 230 may include redirection logic 350. Redirection logic 350 may be responsible for redirecting audio data from a media application to the graphics driver. Down codec function driver 230 may also include receipt logic 360, which may be responsible for receiving decrypted and decoded audio data from the graphics engine and forwarding this data to the down codec for rendering.

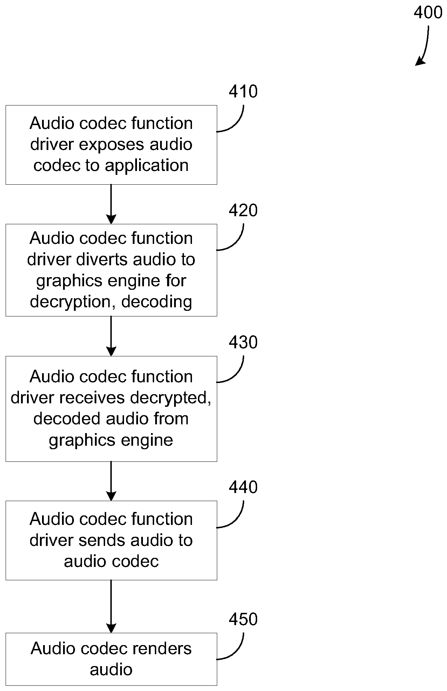

Processing of the system described herein may be performed as illustrated in FIG. 4, according to an embodiment. At 410, the down codec function driver may expose the down codec to the media application. At 420, the down codec function driver may divert encrypted and encoded audio data, received from the media application, to the graphics engine for decryption and decoding. In an embodiment, this audio decryption may use the same key used for video decryption purposes. At 430, after decryption and decoding are completed, the down codec function driver may receive the decrypted and decoded audio from the graphics engine. At 440, the down codec function driver may send the decrypted and decoded audio to the down codec. At 450, the down codec may render the audio.

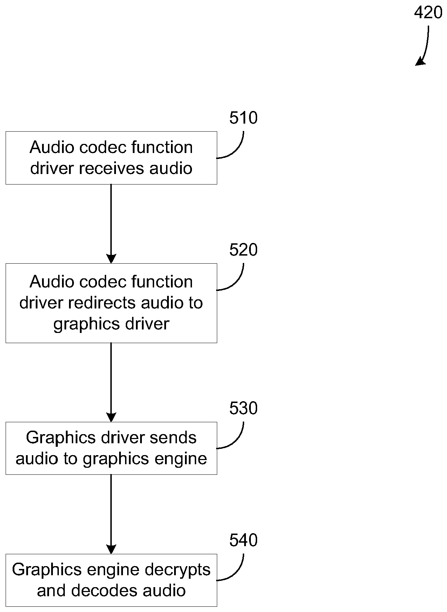

The diversion of the encrypted and encoded audio to the graphics engine (420 in FIG. 4) is illustrated in greater detail in FIG. 5, according to an embodiment. Here, the encrypted and encoded audio may be sent to the graphics engine via a graphics driver. At 510, the down codec function driver may receive the encrypted and encoded audio data. At 520, the down codec function driver may redirect this audio data to the graphics driver. At 530, the graphics driver may send the encrypted and encoded audio data to the graphics engine. At 540, the graphics engine may decrypt and decode this audio data.

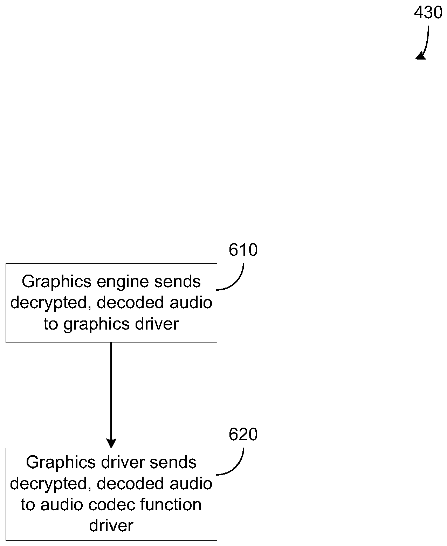

The receipt, by the down codec function driver, of the decrypted and decoded audio from the graphics engine (430 of FIG. 4) it is illustrated in greater detail in FIG. 6, according to an embodiment. At 610, the graphics engine may send the decrypted and decoded audio data to the graphics driver. At 620, the graphics driver may send the decrypted decoded audio data to the down codec function driver for rendering.

Note that after the graphics engine completes decryption and decoding, re-encryption may not be necessary. This assumes that the decrypted audio stream does not have to pass over a path that requires encryption. Examples of such as a path may be one that includes components or other infrastructure that adheres to the Peripheral Component Interconnect Express (PCIe) or Universal Serial Bus (USB) standards, or that includes a High-Definition Multimedia Inteface (HDMI) port. If, on the other hand, the down codec is attached to a bus that requires encryption, the graphics engine may either re-encrypt or down-sample the audio (to 48 kHz, for example) before passing the audio back to the down codec function driver, since down-sampled non-premium audio may not require encryption.

Moreover, by having the down codec function driver redirect the audio data to the graphics engine, and subsequently to the down codec, additional latency may result in the audio path. This decode latency may be handled by having the down codec function driver report back, to the media application, the estimated latency required for the graphics engine to decode the audio packets. This latency information may be generated by the graphics engine and provided to the down codec function driver. Such a mechanism may facilitate synchronization of video and audio streams.

Methods and systems are disclosed herein with the aid of functional building blocks illustrating the functions, features, and relationships thereof. At least some of the boundaries of these functional building blocks have been arbitrarily defined herein for the convenience of the description. Alternate boundaries may be defined so long as the specified functions and relationships thereof are appropriately performed.

## Claims

1. A method for audio decryption and decoding, comprising:
exposing (410) an audio codec, performed by a host processor executing a audio codec function driver (230) to a media application; and
diverting (420) audio data to a graphics engine (120) performed by the host processor executing the audio codec function driver (230), **characterised in that** said diverting comprises:
redirecting (520) the audio data to a graphics driver, performed by the host processor executing the audio codec function driver;
sending (530) the audio data to the graphics engine, performed by the graphics driver;
generating information about estimated decode latency required for the graphics engine to decode the audio data, performed by the graphics engine;
providing said information to the host processor executing the audio codec function driver, performed by the graphics engine;
reporting back said information to said media application; and
decrypting and decoding (540) the audio data, performed by the graphics engine.

2. The method of claim 1, further comprising:
receiving (430), by the host processor executing the audio codec function driver, the audio data in decrypted, decoded form from the graphics engine.

3. The method of claim 2, wherein said receiving comprises:
receiving, by the host processor executing the audio codec function driver, the decrypted, decoded audio data from a graphics driver, which received the decrypted, decoded audio data from the graphics engine.

4. The method of claim 1, further comprising:
sending (440) the decrypted, decoded audio data to the audio codec, performed by the host processor executing the audio codec function driver.

5. The method of claim 4, further comprising:
rendering (450) the decrypted, decoded audio data, performed by the audio codec.

6. A computer program product including a non-transitory computer readable medium having computer program logic (340) stored therein, the computer program logic including:
logic to cause a host processor (110) to divert audio data to a graphics engine (120) for decrypting and decoding, **characterised in that** said logic to cause the host processor (110) to divert audio data comprises:
logic to cause the host processor (110) to redirect the audio data to a graphics driver, which then sends the audio data to the graphics engine (120), and
logic to cause the host processor to receive information about estimated decode latency required for the graphics engine to decode the audio data from the graphics engine and to cause the host processor to report back said information to a media application.

7. The computer program product of claim 6, further comprising:
logic to cause the host processor (110) to receive decrypted, decoded audio data from the graphics engine (120).

8. The computer program product of claim 7, wherein said logic to cause the host processor (110) to receive the decrypted, decoded audio data comprises:
logic to cause the host processor (110) to receive decrypted, decoded audio data from the graphics driver, which received the decrypted, decoded audio data from the graphics engine (120).

9. The computer program product of claim 7, further comprising:
logic to cause the host processor (110) to send the decrypted, decoded audio data to an audio codec (130) for rendering.

10. A system (200; 300), comprising:
a host processor (110; 320); and
a memory (310) in communication with said host processor, wherein said memory stores a plurality of processing instructions configured to direct said host processor to divert audio data to a graphics engine (250) for decryption and decoding, **characterised in that** said instructions to divert audio data comprises instructions configured to direct the host processor to redirect the audio data to a graphics driver (240), which then sends the audio data to the graphics engine (250), and to direct said host processor to receive information about estimated decode latency required for the graphics engine to decode the audio data from the graphics engine and to report back said information to a media application.

11. The system claim 10, wherein said memory further stores a plurality of processing instructions configured to direct said host processor to receive decrypted, decoded audio data from the graphics driver (240), which received the decrypted, decoded audio data from the graphics engine (250).

12. The system claim 10, wherein said memory further stores a plurality of processing instructions configured to direct said host processor to send the decrypted, decoded audio data to an audio codec for rendering.

## Patentansprüche

1. Verfahren für Audioentschlüsselung und -decodierung, die folgenden Schritte umfassend:
Herausstellen (410) eines Audiocodec, durchgeführt durch einen Hostprozessor, der einen Audiocodec-Funktionstreiber (230) ausführt, gegenüber einer Medienanwendung; und
Umleiten (420) von Audiodaten an eine Graphikengine (120), durchgeführt durch den Hostprozessor, der den Audiocodec-Funktionstreiber (230) ausführt,
**dadurch gekennzeichnet, dass** das Umleiten die folgenden Schritte umfasst:
Weiterleiten (520) der Audiodaten an einen Graphiktreiber, durchgeführt durch den Hostprozessor, der den Audiocodec-Funktionstreiber ausführt;
Senden (530) der Audiodaten an die Graphikengine, durchgeführt durch den Graphiktreiber;
Erzeugen von Informationen über eine geschätzte Decodierlatenz, die für die Graphikengine erforderlich ist zum Decodieren der Audiodaten, durchgeführt durch die Graphikengine;
Bereitstellen der Informationen für den Hostprozessor, der den Audiocodec-Funktionstreiber ausführt, durchgeführt durch die Graphikengine;
Rückmelden der Informationen an die Medienanwendung; und
Entschlüsseln und Decodieren (540) der Audiodaten, durchgeführt durch die Graphikengine.

2. Verfahren nach Anspruch 1, ferner umfassend:
Empfangen (430), durch den Hostprozessor, der den Audiocodec-Funktionstreiber ausführt, der Audiodaten in entschlüsselter, decodierter Form von der Graphikengine.

3. Verfahren nach Anspruch 2, wobei das Empfangen Folgendes umfasst:
Empfangen, durch den Hostprozessor, der den Audiocodec-Funktionstreiber ausführt, der entschlüsselten, decodierten Audiodaten von einem Graphiktreiber, welcher die entschlüsselten, decodierten Audiodaten von der Graphikengine erhalten hat.

4. Verfahren nach Anspruch 1, ferner umfassend:
Senden (440) der decodierten, entschlüsselten Audioinformationen an den Audiocodec, durchgeführt durch den Hostprozessor, der den Audiocodec-Funktionstreiber ausführt.

5. Verfahren nach Anspruch 4, ferner umfassend:
Rendern (450) der entschlüsselten, decodierten Audiodaten, durchgeführt durch den Audiocodec.

6. Computerprogrammprodukt, das ein nichttransitorisches computerlesbares Medium beinhaltet, welches darin gespeicherte Computerprogrammlogik (340) aufweist, wobei die Computerprogrammlogik Folgendes beinhaltet:
eine Logik zum Veranlassen eines Hostprozessors (110) zum Umleiten von Audiodaten an eine Graphikengine (120) zum Entschlüsseln und Decodieren,
**dadurch gekennzeichnet, dass** die Logik zum Veranlassen eines Hostprozessors (110) zum Umleiten von Audiodaten Folgendes umfasst:
eine Logik zum Veranlassen des Hostprozessors (110) zum Weiterleiten der Audiodaten an einen Graphiktreiber, welcher dann die Audiodaten an die Graphikengine (120) sendet, und
eine Logik zum Veranlassen des Hostprozessors zum Empfangen von Informationen über eine geschätzte Decodierlatenz, die für die Graphikengine erforderlich ist zum Decodieren der Audiodaten, von der Graphikengine und zum Veranlassen des Hostprozessors zum Rückmelden der Informationen an eine Medienanwendung.

7. Computerprogrammprodukt nach Anspruch 6, ferner umfassend:
eine Logik zum Veranlassen des Hostprozessors (110) zum Empfangen entschlüsselter, decodierter Audiodaten von der Graphikengine (120).

8. Computerprogrammprodukt nach Anspruch 7, wobei die Logik zum Veranlassen des Hostprozessors (110) zum Empfangen entschlüsselter, decodierter Audiodaten Folgendes umfasst:
eine Logik zum Veranlassen des Hostprozessors (110) zum Empfangen von entschlüsselten, decodierten Audiodaten von dem Graphiktreiber, welcher die entschlüsselten, decodierten Audiodaten von der Graphikengine (120) erhalten hat.

9. Computerprogrammprodukt nach Anspruch 7, ferner umfassend:
eine Logik zum Veranlassen des Hostprozessors (110) zum Senden der decodierten, entschlüsselten Audioinformationen an einen Audiocodec (130) zum Rendern.

10. System (200; 300), umfassend:
einen Hostprozessor (110; 320); und
einen Speicher (310) in Kommunikation mit dem Hostprozessor, wobei der Speicher eine Vielzahl von Verarbeitungsanweisungen speichert, die dafür ausgelegt sind, den Hauptprozessor anzuleiten zum Umleiten von Audiodaten an eine Graphikengine (250) zur Entschlüsselung und zum Decodieren,
**dadurch gekennzeichnet, dass** die Anweisungen zum Umleiten von Audiodaten Anweisungen umfassen, die ausgelegt sind zum Anleiten des Hostprozessors zum Weiterleiten der Audiodaten an einen Graphiktreiber (240), welcher dann die Audiodaten an die Graphikengine (250) sendet, und den Hostprozessor anzuleiten zum Empfangen von Informationen über eine geschätzte Decodierlatenz, die für die Graphikengine erforderlich ist zum Decodieren der Audiodaten, von der Graphikengine und zum Rückmelden der Informationen an eine Medienanwendung.

11. System nach Anspruch 10, wobei der Speicher ferner eine Vielzahl von Verarbeitungsanweisungen speichert, die dafür ausgelegt sind, den Hauptprozessor anzuleiten zum Empfangen von entschlüsselten, decodierten Audiodaten von dem Graphiktreiber (240), welcher die entschlüsselten, decodierten Audiodaten von der Graphikengine (250) erhalten hat.

12. System nach Anspruch 10, wobei der Speicher ferner eine Vielzahl von Verarbeitungsanweisungen speichert, die dafür ausgelegt sind, den Hauptprozessor anzuleiten zum Senden der decodierten, entschlüsselten Audioinformationen an einen Audiocodec zum Rendern.

## Revendications

1. Procédé de déchiffrement et de décodage audio, le procédé comprenant les étapes suivantes :
soumission (410) d'un codec audio, effectuée par un processeur hôte exécutant un pilote de fonction de codec audio (230), à une application média ; et
déroutement (420) de données audio vers un moteur graphique (120), effectué par le processeur hôte exécutant le pilote de fonction de codec audio (230),
le procédé étant **caractérisé en ce que** ladite étape de déroutement comprend les étapes suivantes :
réacheminement (520) des données audio vers un pilote graphique, effectué par le processeur hôte exécutant le pilote de fonction de codec audio ;
envoi (530) des données audio au moteur graphique, effectué par le pilote graphique ;
génération d'informations concernant une latence de décodage estimée nécessaire au moteur graphique pour décoder les données audio, effectuée par le moteur graphique ;
fourniture desdites informations au processeur hôte exécutant le pilote de fonction de codec audio, effectuée par le moteur graphique ;
signalement desdites informations à ladite application média ; et
déchiffrement et décodage (540) des données audio, effectués par le moteur graphique.

2. Procédé selon la revendication 1, comprenant en outre l'étape suivante :
réception (430), par le processeur hôte exécutant le pilote de fonction de codec audio, des données audio sous forme déchiffrée et décodée depuis le moteur graphique.

3. Procédé selon la revendication 2, dans lequel ladite étape de réception comprend l'étape suivante :
réception, par le processeur hôte exécutant le pilote de fonction de codec audio, des données audio déchiffrées et décodées depuis un pilote graphique, lequel a reçu les données audio déchiffrées et décodées depuis le moteur graphique.

4. Procédé selon la revendication 1, comprenant en outre l'étape suivante :
envoi (440) des informations audio décodées et déchiffrées au codec audio, effectué par le processeur hôte exécutant le pilote de fonction de codec audio.

5. Procédé selon la revendication 4, comprenant en outre l'étape suivante :
restitution (450) des données audio déchiffrées et décodées, effectuée par le codec audio.

6. Produit-programme d'ordinateur comportant un support non transitoire lisible par ordinateur dans lequel est stockée une logique de programme d'ordinateur (340), la logique de programme d'ordinateur comportant :
une logique destinée à amener le processeur hôte (110) à dérouter des données audio vers un moteur graphique (120) en vue de leur déchiffrement et de leur décodage,
le produit-programme d'ordinateur étant **caractérisé en ce que** ladite logique destinée à amener le processeur hôte (110) à dérouter des données audio comprend :
une logique destinée à amener le processeur hôte (110) à réacheminer les données audio vers un pilote graphique, lequel envoie ensuite les données audio au moteur graphique (120), et
une logique destinée à amener le processeur hôte à recevoir des informations concernant une latence de décodage estimée nécessaire au moteur graphique pour décoder les données audio depuis le moteur graphique et destinée à amener le processeur hôte à signaler lesdites informations à une application média.

7. Produit-programme d'ordinateur selon la revendication 6, comprenant en outre :
une logique destinée à amener le processeur hôte (110) à recevoir des données audio déchiffrées et décodées depuis le moteur graphique (120).

8. Produit-programme d'ordinateur selon la revendication 7, dans lequel ladite logique destinée à amener le processeur hôte (110) à recevoir les données audio déchiffrées et décodées comprend :
une logique destinée à amener le processeur hôte (110) à recevoir des données audio déchiffrées et décodées depuis le pilote graphique, lequel a reçu les données audio déchiffrées et décodées depuis le moteur graphique (120).

9. Produit-programme d'ordinateur selon la revendication 7, comprenant en outre :
une logique destinée à amener le processeur hôte (110) à envoyer les informations audio décodées et déchiffrées au codec audio (130) en vue de leur restitution.

10. Système (200 ; 300), comprenant :
un processeur hôte (110 ; 320) ; et
une mémoire (310) en communication avec ledit processeur hôte, ladite mémoire stockant une pluralité d'instructions de traitement configurées pour donner l'ordre audit processeur hôte de dérouter des données audio vers un moteur graphique (250) en vue de leur déchiffrement et de leur décodage,
le système étant **caractérisé en ce que** lesdites instructions destinées à dérouter des données audio comprennent des instructions configurées pour donner l'ordre au processeur hôte de réacheminer les données audio vers un pilote graphique (240), lequel envoie ensuite les données audio au moteur graphique (250), et pour donner l'ordre audit processeur hôte de recevoir des informations concernant une latence de décodage estimée nécessaire au moteur graphique pour décoder les données audio depuis le moteur graphique et de signaler lesdites informations à une application média.

11. Système selon la revendication 10, dans lequel ladite mémoire stocke en outre une pluralité d'instructions de traitement configurées pour donner l'ordre audit processeur hôte de recevoir des données audio déchiffrées et décodées depuis le pilote graphique (240), lequel a reçu les données audio déchiffrées et décodées depuis le moteur graphique (250) .

12. Système selon la revendication 10, dans lequel ladite mémoire stocke en outre une pluralité d'instructions de traitement configurées pour donner l'ordre audit processeur hôte d'envoyer les informations audio décodées et déchiffrées à un codec audio en vue de leur restitution.
